# EUROPEAN PATENT APPLICATION

(11) **EP 2 192 137 A1**
(43) Date of publication of application: **02.06.2010**
(21) Application number: 08831486.9
(22) Date of filing: 04.09.2008
(51) Int. Cl.: C08G 18/32, C08G 18/42, C08L 101/16

(54) **POLYURETHANE AND POLYUREA, AND METHOD FOR PRODUCING THE SAME**

(30) Priority: 19.09.2007 JP 2007242499; 17.12.2007 JP 2007325034; 17.12.2007 JP 2007325071
(71) Applicant: Kabushiki Kaisha Toyota Jidoshokki, Kariya-shi, Aichi 448-8671 (JP)
(72) Inventor: YAMAMOTO, Yusuke, Kariya-shi Aichi 448-8671 (JP); OHMORI, Osamu, Kariya-shi Aichi 448-8671 (JP); MURASE, Hitotoshi, Kariya-shi Aichi 448-8671 (JP); TAKASHIMA, Hiroaki, Kariya-shi Aichi 448-8671 (JP); MASE, Kohei, Kariya-shi Aichi 448-8671 (JP); ABE, Tomokuni, Kariya-shi Aichi 448-8671 (JP); SHIMO, Toshihisa, Kariya-shi Aichi 448-8671 (JP)
(74) Representative: TBK-Patent
(86) International application number: PCT/JP2008/066363
(87) International publication number: WO 2009/038007

(57) **Abstract**

A high-elasticity biodegradable polymer comprising PDC, which has excellent solubility in solvents and reactants, in their repeating unit structures is provided in an inexpensive manner.
A polymer comprising a repeating unit represented by the following formula (I): 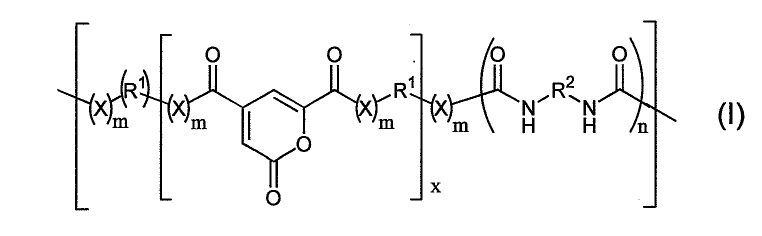 wherein
R¹ and R² each independently represent a divalent hydrocarbon residue with no active hydrogens in its structure and optionally containing a heteroatom;
X represents O or NH;
x represents an integer of at least 1; and
m and n represent 0 or 1;
and a process for their production.

## Description

### Technical Field

The present invention relates to biodegradable polymers, especially polyurethanes and polyureas, comprising a plant-derived 2H-pyron-2-one-4,6-dicarboxylic acid in the repeating unit structure, as well as to a process for their production.

### Background Art

Polyethylene, polypropylene, polyvinyl chloride, polyethylene terephthalate and the like are commonly employed resins in the prior art, and they are used as molded articles such as containers, and as waste bags, packaging bags and the like. Because such resins are obtained from petroleum starting materials, however, their disposal after use leads to increased carbon dioxide on the Earth when they are incinerated, thus contributing to global warming. Even if they are buried without incineration, they remain semi-permanently in the ground since they are hardly not decomposed by the natural environment. Depending on the type of disposed plastic, the landscape may be spoiled or the living environment of marine organisms may be destroyed.

In recent years, focus has been increasing on vegetable-based resins that are made by plants such as corn or sugarcane. Resins of this type cause less environmental disruption since they are biodegradable. Such resins include polylactic acid and polyhydroxybutyric acid, which have rigidity and strength equivalent to petroleum-based resins and whose applications for various molding materials are being developed. However, because such vegetable resins use foodstuffs such as starch and corn starch as raw materials, they are potentially in competition with food materials.

The plant component, lignin, on the other hand, is a biomass resource that is ubiquitously present as an aromatic polymer compound in plant cell walls, but since it is composed of ingredients with various chemical structures and has a complex macromolecular structure, no effective technology has been developed for its use. Consequently, the lignin that is produced in mass by paper-making processes has been only burned as a substitute for heavy oil, without being effectively utilized. In recent years, however, it has become possible to convert plant aromatic components such as lignin into several low molecular mixtures by chemical decomposition, physicochemical decomposition or the like, and further to convert them to 2-pyrone-4,6-dicarboxylic acid (hereinafter abbreviated as "PDC"), which can be used as an intermediate substance for preparing functional plastic starting materials or chemical product starting materials. Methods have therefore been desired for effective utilization of lignin as a vegetable resin without competition with food materials.

Current biodegradable polymers derived from such lignins include a lignin-containing biodegradable polyurethane complex (Japanese Unexamined Patent Publication (Kokai) No. 2000-319350), as well as thermoplastic elastomer composition obtained by addition of lignin to a conventional thermoplastic elastomer (Japanese Unexamined Patent Publication (Kokai) No. 2005-2259) having excellent thermoplastic elastomer recycling properties and improved compression setting.

Products obtained from lignocellulose-derived polyols and polyisocyanates are also known (Japanese Unexamined Patent Publication (Kokai) No. 2000-37867). In addition, foamed products have been produced from biodegradable polyurethane by adding foaming agent thereto (Japanese Unexamined Patent Publication (Kokai) No. 2000-37867). A foaming property is usually imparted to polyurethane by a method of adding a foaming agent such as water or an inert gas, a method of dispersing hollow microbeads into the starting material and curing to produce closed cells in the microbead portions, or a method of mechanically stirring the starting material while mixing it with air. Among them, the foaming method which utilizes a foaming agent is most commonly used because it produces stable air bubbles.

However, because biomass substances such as lignocellulose have low compatibility with polyisocyanates, the process for preparing biomass-derived polyols is complicated, as the process requires to use the steps of first convert them to liquefied biomass and then modify them with specific esterifying agents or etherifying agents.

When foaming agents are used, it should be noted that inert gases such as Freon or argon are expensive.
On the other hand, water reacts with polyisocyanates resulting in polyamines which will be a starting material for synthesis of polyureas.

Since the molecular weight of PDC is extremely low in comparison to that of lignin, it has excellent solubility in solvents or reactants. Moreover, it is known that the 2H-pyron-2-one ring structure of PDC imparts a rigid structure to the polymer and can therefore provide flexibility, elasticity and high strength to the material, while its high polarity and high refractive index can yield materials having such properties (WO99/54376, WO99/54384).

### Disclosure of the Invention

It is an object of the present invention to provide, in an inexpensive and convenient manner, highly elastic biodegradable polyurethane and/or polyurea compounds comprising PDC in the repeating unit structure. It is another object to provide biodegradable foamed polyurethane without using a foaming agent.

As a result of much diligent research in light of the circumstances described above, the present inventors have found that novel biodegradable polyurethanes comprising PDC in the repeating unit structure can be obtained by reacting diisocyanates with PDC or its derivative obtained by fermentative production. It was further discovered that use of a diisocyanate derivative of PDC or a diamine derivative of PDC, as at least one of the components in the polyaddition reaction between the diisocyanate component and diamine component, can yield novel biodegradable polyureas comprising PDC in the repeating unit structure, and the invention was thereupon completed.

Specifically:
(1) The invention provides a polymer having a repeating unit represented by the following formula (I): 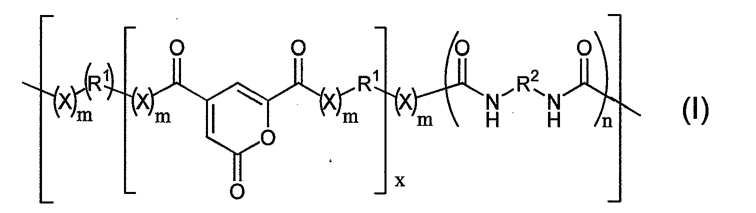 wherein
   R¹ and R² each independently represent a divalent hydrocarbon residue with no active hydrogens in its structure and optionally containing a heteroatom;
   X represents O or NH;
   x represents an integer of at least 1; and
   m and n represent 0 or 1.
(2) The invention provides a polymer according to (1), which is a polyurethane having a repeating unit represented by the following formula (II): 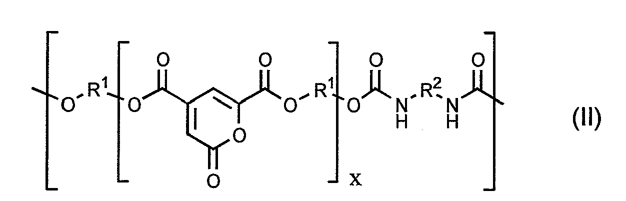 wherein
   R¹ and R² each independently represent a divalent hydrocarbon residue with no active hydrogens in its structure and optionally containing a heteroatom; and
   x represents an integer of at least 1.
(3) The invention provides a polymer according to (2), wherein the polyurethane has a repeating unit represented by the following formula (III): 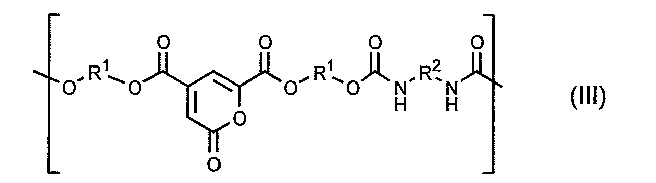 wherein R¹ and R² have the same definitions as above.
(4) The invention provides a polymer according to (2), wherein the polyurethane has a repeating unit represented by the following formula (IV): 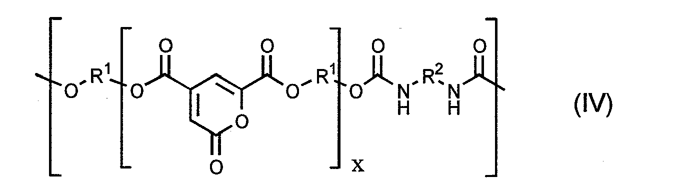 wherein R¹ and R² have the same definitions as above, and
   x is an integer of at least 2.
(5) The invention provides a polymer according to any one of (1) to (4), wherein R¹ and R² each independently represent R³, R³-(OR³)ₐ or R⁴-(O₂C-R³-CO₂R⁴)b, where R³ and
   R⁴ each independently represent a C1-24 saturated or unsaturated divalent hydrocarbon residue, and a and b each independently represents an integer of 1-4.
(6) The invention provides a polymer according to any one of (1) to (5), wherein R¹ and R² each independently represent a C1-24 straight or branched alkylene group.
(7) The invention provides a polymer according to (1), which is a polyurethane having a repeating unit represented by the following formula (V): 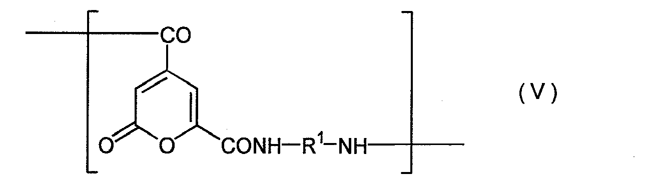 wherein
   R¹ represents a divalent hydrocarbon residue with no active hydrogens in its structure and optionally containing a heteroatom.
(8) The invention provides a polymer according to (7), which is an foamable polyurethane.
(9) The invention provides a polymer according to (7) or (8), wherein R¹ represents R³, R³-(OR³)ₐ or R⁴-(O₂C-R³-CO₂R⁴)_{b}, where R³ and R⁴ each independently represent a C1-24 saturated or unsaturated divalent hydrocarbon residue, and a and b each independently represent an integer of 1-4.
(10) The invention provides a polymer according to any one of (7) to (9), wherein R¹ represents a C1-24 straight or branched alkylene group.
(11) The invention provides a polymer according to any one of (7) to (10), wherein R¹ represents a hexamethylene group.
(12) The invention provides a process for production of a polymer having a repeating unit represented by the following formula (I): 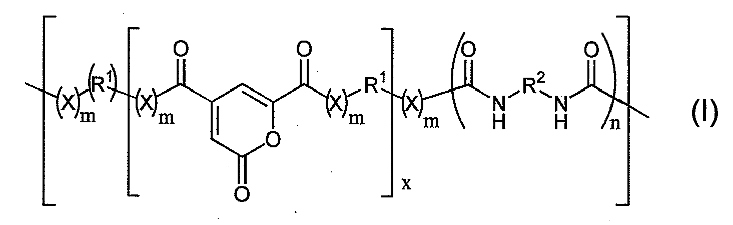 wherein
   R¹ and R² each independently represent a divalent hydrocarbon residue with no active hydrogens in its structure and optionally containing a heteroatom;
   X represents O or NH;
   x represents an integer of at least 1; and
   m and n represent 0 or 1,
   the process being **characterized in that** 2H-pyron-2-one-4,6-dicarboxylic acid or its derivative is reacted with diisocyanates in the absence of a foaming agent; or
   a diamine component containing a diamine of 2H-pyron-2-one-4,6-dicarboxylic acid is reacted with a diisocyanate component containing a diisocyanate of 2H-pyron-2-one-4,6-dicarboxylic acid, in the absence of a foaming agent, with the proviso that a diamine of 2H-pyron-2-one-4,6-dicarboxylic acid and/or a diisocyanate of 2H-pyron-2-one-4,6-dicarboxylic acid is used for either or both the diamine component and diisocyanate component, respectively.
(13) The invention provides the process according to (12), wherein the 2H-pyron-2-one-4,6-dicarboxylic acid derivative is a diester of 2H-pyron-2-one-4,6-dicarboxylic acid, or a polyester thereof, obtained by reacting 2H-pyron-2-one-4,6-dicarboxylic acid with a polyol.
(14) The invention provides a polymer according to (1), which is a polyurea having a repeating unit represented by the following formula (VI): 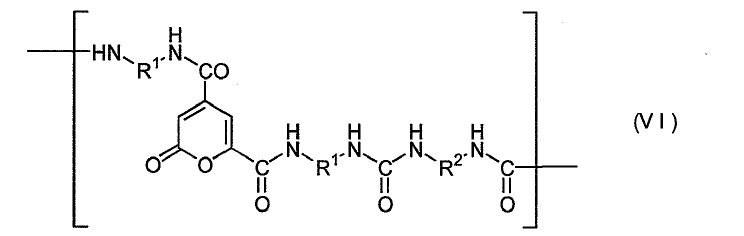 wherein R¹ and R² each independently represent a divalent hydrocarbon residue with no active hydrogens in its structure and optionally containing a heteroatom.
(15) The invention provides a polymer according to (14), wherein R¹ and R² each independently represent R³, R³-(OR³)ₐ or R⁴-(O₂C-R³-CO₂R⁴)_{b}, where R³ and R⁴ each independently represent a C1-24 saturated or unsaturated divalent hydrocarbon residue, and a and b each independently represent an integer of 1-4.
(16) The invention provides a polymer according to (14) or (15), wherein R¹ and R² each independently represent a C1-24 straight or branched alkylene group or C5-10 aromatic divalent hydrocarbon residue.
(17) The invention provides a compound represented by the following formula (VII): 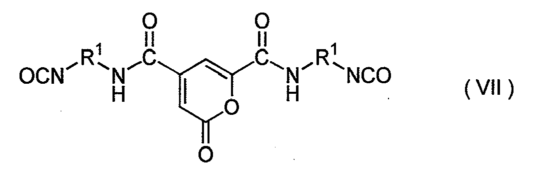 wherein R¹ represents a divalent hydrocarbon residue with no active hydrogens in its structure and optionally containing a heteroatom.
(18) The invention provides a compound represented by the following formula (VIII): 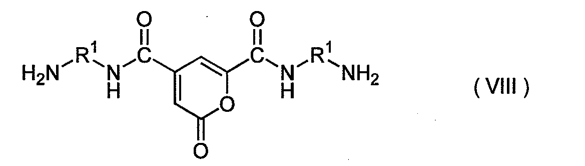 wherein R¹ represents a divalent hydrocarbon residue with no active hydrogens in its structure and optionally containing a heteroatom.
(19) The invention provides a process for production of a polymer according to (12), characterized by polyaddition of a diisocyanate component and a diamine component using either or both a compound represented by the following formula (VII): 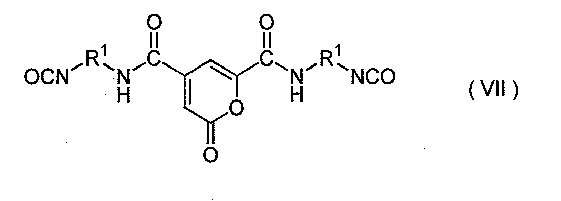
wherein R¹ represents a divalent hydrocarbon residue with no active hydrogens in its structure and optionally containing a heteroatom
or a compound represented by the following formula (VIII): 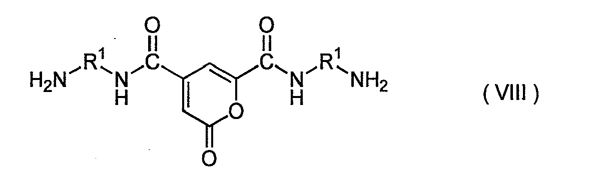 wherein R¹ represents a divalent hydrocarbon residue with no active hydrogens in the structure and optionally containing a heteroatom,
as the diisocyanate component and diamine component, respectively.

According to the invention it is possible to efficiently and inexpensively obtain highly elastic biodegradable polymers. The biodegradable polymers of the invention are therefore industrially useful as materials for coating materials, adhesives, sealing materials, fillers, heat-insulating materials, fiber products, shoes, automobile parts and the like.

### Brief Description of the Drawings

Fig. 1 is a graph showing the results of DSC measurement of the BHPDC polyurethane obtained in Example 2.
Fig. 2 is a temperature-weight reduction curve for the BHPDC polyurethane obtained in Example 2.
Fig. 3 is a graph showing MALD-TOF-MS results for the BHPDC polyurethane obtained in Example 2.

### Best Mode for Carrying Out the Invention

### <Polyurethane and polyurea of the invention>

The polymer having a repeating unit represented by formula (I) (hereinafter referred to as "polymer of formula (I)") as a polymer of the invention is, specifically, polyurethane or polyurea.

In formula (I), R¹ and R² each independently represent a divalent hydrocarbon residue with no active hydrogens in its structure and optionally containing a heteroatom, and preferably represent R^{3,} R³-(OR³)ₐ or R⁴-(O₂C-R³-CO₂R⁴)_{b}, where R³ and R⁴ each independently represent a C1-24 saturated or unsaturated hydrocarbon divalent residue, and a and b each independently represent an integer of 1-4.

As examples of R³ there may be mentioned C1-24 straight or branched alkylene groups (such as ethylene, trimethylene, tetramethylene, hexamethylene, octamethylene, decamethylene, dodecamethylene, etc.), C3-8 cyclic alkane divalent residues (such as cyclohexylene, etc.), C5-10 aromatic divalent hydrocarbon residues (such as phenylene, tolylene, xylylene, naphthylene, methylnaphthylene, biphenylene, etc.), and C7-24 aralkyl divalent residues or C8-24 alkylarylalkyl divalent residues comprising C1-6 alkyl groups and C6-14 aryl groups. As an example of the R³-(OR³)ₐ group there may be mentioned -CH₂CH₂-(OCH₂CH₂)₂-. As an example of R⁴-(O₂C-R³-CO₂R⁴)_{b} group there may be mentioned -CH₂CH₂-(O₂C-CH₂CH₂-CO₂CH₂CH₂)-. These divalent hydrocarbon residues may optionally have additional substituents with no active hydrogens, such as alkyl groups (preferably, C₁-C₆ alkyl), alkoxy groups (preferably, C₁-C₆ alkoxy), alkanoyl groups (preferably, C₂-C₆ alkanoyl), aryl groups (preferably, C₆-C₁₄ aryl) and aralkyl groups (preferably, C₇-C₁₈ aralkyl).

R¹ and R² are preferably C1-24 straight or branched alkylene or C5-10 aromatic divalent hydrocarbon residues.

The polymers of formula (I) include the following polymers:
(i) polyurethanes having a repeating unit represented by the following formula (II): 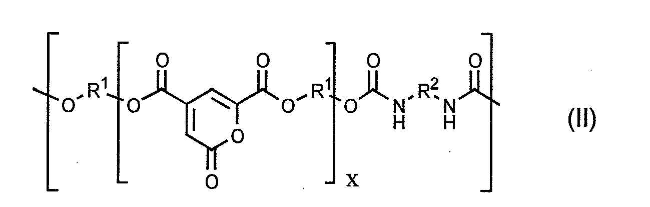 wherein
   R¹ and R² each independently represent a divalent hydrocarbon residue with no active hydrogens in its structure and optionally containing a heteroatom; and x represents an integer of at least 1;
(ii) polyurethanes having a repeating unit represented by the following formula (V): 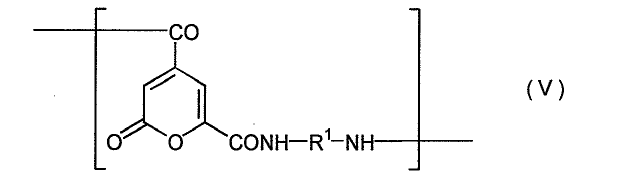 wherein R¹ represents a divalent hydrocarbon residue with no active hydrogens in its structure and optionally containing a heteroatom; and
(iii) polyureas having a repeating unit represented by the following formula (VI): 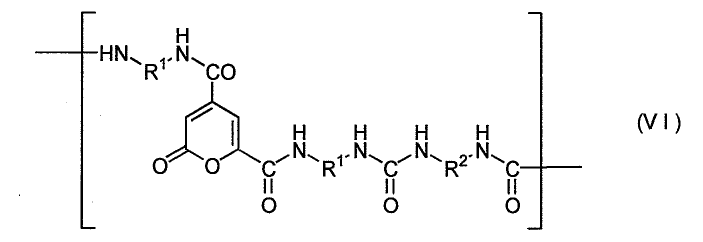
wherein R¹ and R² each independently represent a divalent hydrocarbon residue with no active hydrogens in its structure and optionally containing a heteroatom.

Preferred as polyurethanes of formula (II) above are polyurethanes having a repeating unit comprising a PDC diester and a diisocyanate, represented by the following formula (III): 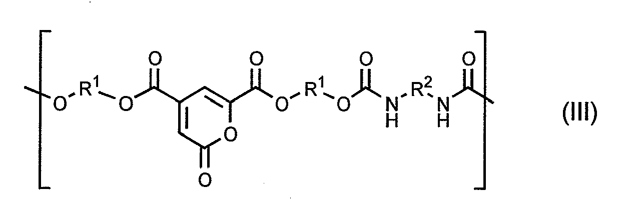 wherein R¹ and R² have the respective definitions of R¹ and R² in formula (I); or
polyurethanes having a repeating unit comprising a PDC polyester and a diisocyanate, represented by the following formula (IV): 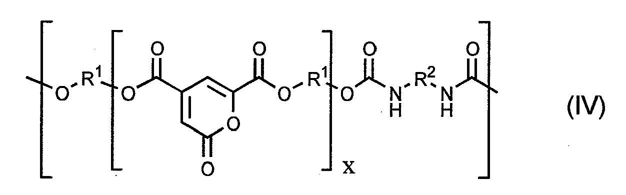 wherein R¹ and R² have the respective definitions of R¹ and R² in formula (I); and x is an integer of at least 2.

The polyurethane represented by formula (V) is preferably an foamable polyurethane.

Representative production processes for polyurethanes represented by formulae (III), (IV), (V) and (VI) of the present invention will be explained below.

### <Production processes for polyurethanes represented by formulae (III) and (IV)>

The polyurethanes of the present invention may be produced by addition polymerization of a diol component (PDC diester or PDC polyester) and a diisocyanate or its alkali metal addition product. A production example is explained below.

### Production Process 1:

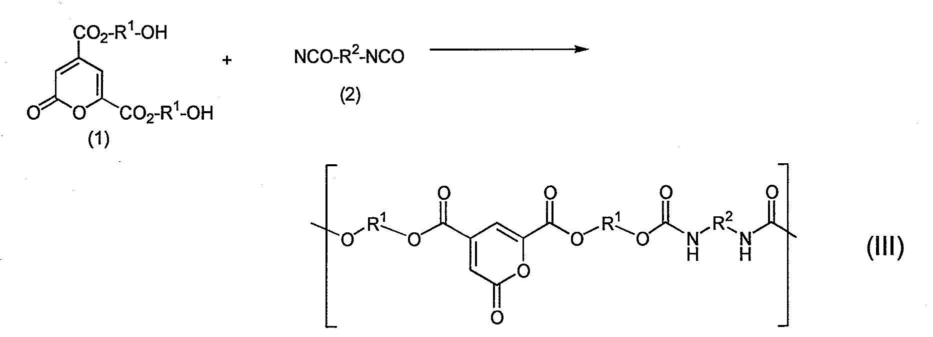

wherein, R¹ and R² are as defined above.

Specifically, PDC diester (1) and diisocyanate (2) are subjected to addition polymerization to obtain polyurethane (III) of the invention.

The PDC diester (1) is obtained, for example, by reaction between a polyol mentioned below and a PDC derivative (3) obtained by esterification or halidization of PDC by a conventional method: 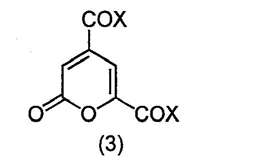 wherein, X represents a lower alkoxy group such as methoxy, ethoxy or n-propoxy, or a halogen atom such as F, Cl, Br or I.

The polyol is a hydrocarbon polyol with no active hydrogens in its structure and optionally containing a heteroatom, and without any particular restrictions, examples thereof include straight aliphatic alcohols such as ethylene glycol, 1,3-propanediol, 1,4-butanediol, 1,5-pentanediol, 1,6-hexanediol, etc; dihydric aromatic alcohols such as hydroquinone, bisphenol A, 4,4'-isopropylidene-bis(2,6-dimethylphenol), 4,4'-(hexafluoroisopropylidene)diphenol, 4,4'-dihydroxybiphenyl, 4,4'-(1,3-adamantanediyl)diphenol, etc; bile acids such as deoxycholic acid, chenodeoxycholic acid, ursodeoxycholic acid, etc; compounds with non-equivalent hydroxyl groups such as 1,5-dihydroxy-1,2,3,4-tetrahydronaphthalene, diols such as 4,4'-dihydroxybiphenyl, 4'-[(N,N-dihydroxyethyl)amino]-4-nitroazobenzene, 4'-[(N,N-dihydroxyethyl)amino]-4-methoxyazobenzene, 4'-[(N,N-dihydroxyethyl)amino]-4-cyanoazobenzene, etc; diols such as 3,6-hydroxymethyl-9-heptylcarbazole, 2-hydroxymethyl-3- (N-benzyl-3-carbazolyl)propanol, etc; diols containing mesogen such as 2-[6-[4'-butoxy-4-biphenyloxy]butyl]propane-1,3-diol, 2-[6-[4'-methoxy-4-biphenyloxy]butyl]propane-1,3-diol, etc; diols with hydrogen bondable amino groups such as N,N-dihydroxyethylisonicotineamide, N-phenyldiethanolamine, etc; glycerin, trimethylolethane, trimethylolpropane, pentaerythritol, hexane-1,2,6-triol or sorbitol, glycerides of higher fatty acids such as oleic acid, gadoleic acid, erucic acid, linolic acid, linolenic acid, ricinolic acid, arachidonic acid, etc., or polyhydric alcohols such as polyethylene glycol of number-average molecular weight 200-100,000, as well as combinations of two or more of the foregoing.

As examples of diisocyanates (2) there may be mentioned aromatic diisocyanates such as 4,4'-diphenylmethane diisocyanate, 2,4'-diphenylmethane diisocyanate, toluene diisocyanate (TDI), naphthalene diisocyanate, 1,4-phenylene diisocyanate, etc; aliphatic diisocyanates such as ethylene diisocyanate, 2,2,4-trimethylhexamethylene diisocyanate, 1,6-hexamethylene diisocyanate (HDI), etc; alicyclic diisocyanates such as hydrogenated 4,4'-diphenylmethane diisocyanate (HMDI), 1,4-cyclohexane diisocyanate (CHDI), isophorone diisocyanate (IPDI), hydrogenated m-xylylene diisocyanate (HXDI), norbornane diisocyanate, xylylene diisocyanate (XDI), tetramethylxylylene diisocyanate (TMXDI), etc.

As alkali metal addition products of diisocyanates there may be mentioned potassium salts and sodium salts of the aforementioned diisocyanates.

PDC can be easily obtained from plant-derived, for example, lignin-derived low molecular compounds such as vanillin, syringaldehyde, vanillic acid, syringic acid or protocatechuic acid, or from mixtures thereof, by the method described in Japanese Unexamined Patent Publication (Kokai) No. 2005-278549, for example. Specifically, PDC can be prepared at a high yield by transfecting a host such as a microorganism (for example, *Pseudomonas putida* PpY1100) with a recombinant vector comprising genes coding for 4 different enzymes that catalyze a multistage reaction for the production of PDC (benzaldehyde dehydrogenase, demethylase, protocatechic acid 4,5-dioxygenase and 4-carboxy-2-hydroxymuconic acid-6-semialdehyde dehydrogenase) to create a transformant, and then culturing the transformant in the presence of the aforementioned compounds or their mixture. PDC can also be obtained in the form of an alkali metal (for example, sodium, potassium, rubidium, silver, etc.) salt or an alkaline earth metal (calcium or magnesium) salt.

The mixing ratio of the PDC diester (1) and diisocyanate (2) is not particularly restricted but is preferably about 2:1-1:3 by molar ratio. If the diisocyanate is used in excess of this range, the isocyanates remaining on the polymer ends may react with the amine to cause off-odors or bad odors. In order to obtain a high molecular weight polyurethane, such as a polyurethane with a weight-average molecular weight of 100,000 or greater, the PDC diester (1) and diisocyanate (2) are preferably used in a molar ratio of about 1:1.

Although a polymerization catalyst is not absolutely required for production of a polyurethane of the present invention, there may be employed catalysts conventionally used for production of polyurethanes including, for example, tertiary amines such as triethylamine, tributylamine, N-methylmorpholine, N-ethylmorpholine, N,N,N',N'-tetramethylethylenediamine, pentamethyldiethylenetriamine, triethylenediamine, N-methyl-N'-dimethylaminoethylpiperazine, N,N-dimethylbenzylamine, N,N-dimethylcyclohexylamine, N,N,N',N'-tetramethyl-1,3-butanediamine and 1,2-dimethylimidazole; secondary amines such as dimethylamine; alkanolamines such as N-methyldiethanolamine, N-ethyldiethanolamine and N,N-dimethylethanolamine; tetraalkylammonium hydroxides such as tetramethylammonium hydroxide and benzyltrimethylammonium hydroxide; alkali metal phenolates such as sodium phenolate; alkali metal hydroxides such as potassium hydroxide; alkali metal alkoxides such as sodium methoxide; alkali metal salts of carboxylic acids such as potassium acetate, sodium acetate and potassium 2-ethylhexanoate; phosphines such as triethylphosphine; metal chelate compounds such as potassium-salicylaldehyde; organic tin (II) compounds such as stannous acetate and stannous octoate (stannous 2-ethylhexoate); organic tin (IV) compounds such as dibutyltin oxide, dibutyltin dichloride, dibutyltin diacetate, dibutyltin dilaurate, dibutyltin maleate and dioctyltin diacetate; and organometallic compounds such as dialkyl titanates. Isocyanuratated catalysts such as tris(dimethylaminomethyl)phenol and N,N',N'-tris(dimethylaminopropyl)hexahydro-s-triazine may also be used. These catalysts are preferably used in an amount of about 0.001-1 wt% in the reaction mixture.

As examples of solvents there may be mentioned ether solvents such as tetrahydrofuran, diethyl ether, 1,4-dioxane and dimethoxyethane; aromatic hydrocarbon solvents such as benzene, toluene and xylene; alicyclic hydrocarbon solvents such as cyclohexane and cyclohexanone; ester solvents such as acetic acid esters; ketone solvents such as acetone and methyl ethyl ketone; and aprotic polar solvents such as acetonitrile, N,N-dimethylformamide and dimethyl sulfoxide. These solvents may also be used in combinations of two or more. The amount of the solvent to be used will normally be 20-1,000 parts by weight with respect to 100 parts by weight as the total starting monomer.

The polymerization reaction may be carried out at between 0°C and room temperature, if necessary, with heating, for 1 hour to several hours.

### Production Process 2:

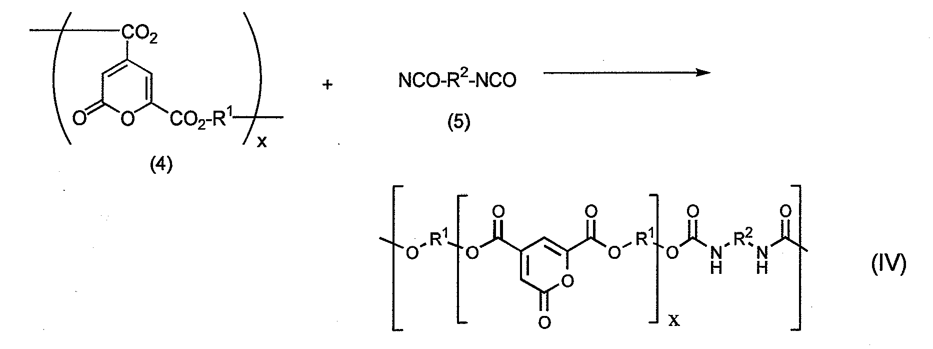

wherein, R¹, R² and x have the same definitions as above.

Specifically, PDC polyester (4) and diisocyanate (5) are subjected to addition polymerization to obtain a polyurethane (IV) of the present invention.

The PDC polyester (4) may be obtained by the method described in International Patent Publication No. WO99/54384, i.e., homopolycondensation of the PDC diester (1) obtained by production process 1 mentioned above, or polycondensation of the PDC diester (1) with a carbonic dihalide such as carbonic dichloride. PDC polyester (4) may also include compounds obtained by polycondensation of PDC derivative (3) with the polyols mentioned above.

The mixing ratio of PDC polyester (4) and diisocyanate (5) is not particularly restricted but is preferably about 2:1-1:3 as the molar ratio. If the diisocyanate is used in excess of this range, the isocyanates remaining on the polymer ends may react with the amine and cause off-odors or bad odors. In order to obtain a high molecular weight polyurethane, such as a polyurethane with a weight-average molecular weight of 100,000 or greater, PDC polyester (4) and diisocyanate (5) are preferably used in a molar ratio of about 1:1.

The reaction conditions, including the polyol, diisocyanate, catalyst, solvent and temperature used in production process 2, are the same as for production process 1.

The molecular weight of the polyurethane obtained by the production process of the present invention is not particularly restricted and may differ depending on the use, but it will normally be about 5,000-400,000 as the weight-average molecular weight. From the viewpoint of ease of preparing the solution, molding workability and the physical properties such as mechanical strength, it is most preferably about 10,000-300,000.

### <Production process for foamed polyurethane represented by formula (V)>

The foamed polyurethane of formula (V) according to the invention can be produced by reacting PDC with diisocyanate (6). A salt of the PDC may be used instead of PDC. In the production process of the invention, the carbon dioxide produced by the reaction becomes a foaming source, thus eliminating the requirement for a foaming agent such as inert gas which is commonly used for production of foamed polyurethane. A production example is explained below: 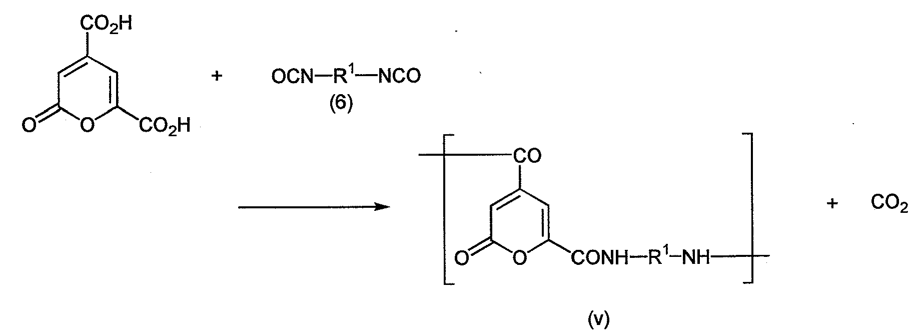 wherein, R¹ represents a hydrocarbon-based divalent residue with no active hydrogens in its structure and optionally containing a heteroatom.

Diisocyanate (6) used for the present invention may be any one conventionally used for polyurethane production. Such diisocyanates include C6-20 (excluding the carbon atoms in the NCO group) aromatic diisocyanates, C2-18 aliphatic diisocyanates, C4-15 alicyclic diisocyanates, C8-15 aromatic aliphatic diisocyanates and modified forms of these diisocyanates (urethane, carbodiimide, allophanate, bicyanurate, oxazolidone group-containing modified forms, etc).

As specific examples of such diisocyanates (6) there may be mentioned aromatic diisocyanates such as 1,3- and 1,4-phenylene diisocyanate, 2,4- and/or 2,6-tolylene diisocyanate (TDI), crude TDI, diphenylmethane-2,4'-and/or 4,4'-diisocyanate (MDI), naphthylene-1,5-diisocyanate, triphenylmethane-4,4',4"-triisocyanate and m- and p-isocyanatophenylsulfonyl isocyanate; aliphatic diisocyanates such as ethylene diisocyanate, tetramethylene diisocyanate, hexamethylene diisocyanate, dodecamethylene diisocyanate, 1,6,11-undodecane triisocyanate, 2,2,4-trimethylhexane diisocyanate, lysine diisocyanate, 2,6-diisocyanatomethyl caproate, bis(2-isocyanatoethyl)fumarate, bis(2-isocyanatoethyl)carbonate and 2-isocyanatoethyl-2,6-diisocyanate hexanoate; alicyclic diisocyanates such as isophorone diisocyanate, dicyclohexylmethane diisocyanate (hydrogenated MDI), cyclohexylene diisocyanate, methylcyclohexylene diisocyanate (hydrogenated TDI) and bis(2-isocyanatoethyl) 4-cyclohexene-1,2-dicarboxylate; aromatic aliphatic diisocyanates such as xylylene diisocyanate and diethylbenzene diisocyanate; modified MDI (urethane-modified MDI, carbodiimide-modified MDI, trihydrocarbyl phosphate-modified MDI and the like); urethane-modified diisocyanates such as urethane-modified TDI, and mixtures of two or more of the foregoing.

The mixing ratio of the PDC and diisocyanate (6) is not particularly restricted but is preferably about 2:1-1:2.5 by molar ratio. If the diisocyanate is used in excess of this range a crosslinked structure will be produced, making it difficult to accomplish stable foaming. If it is used below this range, on the other hand, foaming will not easily occur.

Although a polymerization catalyst is not absolutely necessary for production of a foamed polyurethane of the present invention, when it is used, it is preferable to use those described in <Production processes for polyurethanes represented by general formulas (III) and (IV)>, and the amount used is the amount mentioned in therein.

A foam stabilizer, filler, stabilizer or the like may also be added as necessary in the production process of the present invention.

As examples of foam stabilizers there may be mentioned publicly known organic silicon surfactants, and specifically L-501, L-520, L-532, L-540, L-544, L-3550, L-5302, L-5305, L-5320, L-5340, L-5350, L-5410, L-5420, L-5710 and L-5720 (all products of Nippon Unicar Co., Ltd.), SH-190, SH-192, SH-193, SH-194, SH-195, SH-200 and SRX-253 (all products of Toray Silicone Co., Ltd.), F-114, F-121, F-122, F-220, F-230, F-258, F-260, F-305, F-306, F-317, F-341, F-601, F-606B, X-20-200 and X-20-201 (all products of Shin-Etsu Chemical Co., Ltd.); TFA-4200 and TFA-4202 (both products of Toshiba Silicone) and B8414 (product of Goldschmidt, Ltd.). The foam stabilizer is preferably used at 0.05-1 wt% and especially 0.08-0.8 wt% with respect to the diisocyanate.

As examples of fillers there may be mentioned vinylidene chloride, AEROSIL and the like. Stabilizers for diisocyanates include, for example, trimethyl phosphate.

As examples of solvents there may be mentioned ether solvents such as tetrahydrofuran, diethyl ether, 1,4-dioxane and dimethoxyethane; aromatic hydrocarbon solvents such as benzene, toluene and xylene; alicyclic hydrocarbon solvents such as cyclohexane and cyclohexanone; ester solvents such as acetic acid esters; and ketone solvents such as acetone and methyl ethyl ketone. These solvents may also be used in combinations of two or more. The amount of solvent used will normally be 20-1,000 parts by weight with respect to 100 parts by weight as the total starting monomer.

The polymerization reaction may be carried out at about 0°C-75°C, if necessary, with further heating, for 1 hour to several hours.

The molecular weight of the foamed polyurethane obtained by the production process of the present invention may differ depending on the use, but it will normally be about at least 10,000 and preferably 10,000-400,000, as the weight-average molecular weight. From the viewpoint of ease of preparing the solution, molding workability and the physical properties such as mechanical strength, it is most preferably about 10,000-300,000. The mean air bubble diameter is between about 10 µm and 200 µm. The mean air bubble diameter is determined by subjecting a photograph of the pad cross-section observed at 200x magnification obtained by means of an SEM2400 scanning electron microscope (product of Hitachi, Ltd.), to an analysis using an image processing device, whereby calculating all of the air bubble diameters within the photograph.

Depending on the use, the composition containing the polyurethane of the invention according to formula (III), (IV) or (V) may contain additional additives used in polyurethane compositions of the prior art, including flame retardants such as phosphorus compounds or halogen-containing compounds, antioxidants, ultraviolet absorbers, pigments, dyes, plasticizers and the like. <Production process for polyurea represented by formula (VI)>

The polyurea (VI) of the present invention can be produced by polyaddition reaction of a diamine component containing a diamine of 2H-pyron-2-one-4,6-dicarboxylic acid, and a diisocyanate component containing a diisocyanate of 2H-pyron-2-one-4,6-dicarboxylic acid. However, a diamine of 2H-pyron-2-one-4,6-dicarboxylic acid and/or a diisocyanate of 2H-pyron-2-one-4,6-dicarboxylic acid is used for either or both of the diamine component and diisocyanate component.

Here, the term "diamine component" includes diamines of 2H-pyron-2-one-4,6-dicarboxylic acid and diamines represented by the following formula (8). The term "diisocyanate component" includes diisocyanates of 2H-pyron-2-one-4,6-dicarboxylic acid and diisocyanates represented by the following formula (9).

The polyurea (VI) of the present invention can be produced, specifically, by polyaddition reaction of a diisocyanate derivative represented by formula (7) and a diamine (8) represented by the formula H₂N-R²-NH₂, or polyaddition reaction of a diamine derivative represented by formula (9) and a diisocyanate (10) represented by the formula OCN-R²-NCO. Alternatively, it may be produced by polyaddition reaction of a diisocyanate derivative represented by formula (7) and a diamine derivative represented by formula (9). The symbols R² in formulae H₂N-R²-NH₂ and OCN-R²-NCO are as defined for formula (I). A production example for a polyurea (VI) according to the present invention will be explained below.

### Production Process 1:

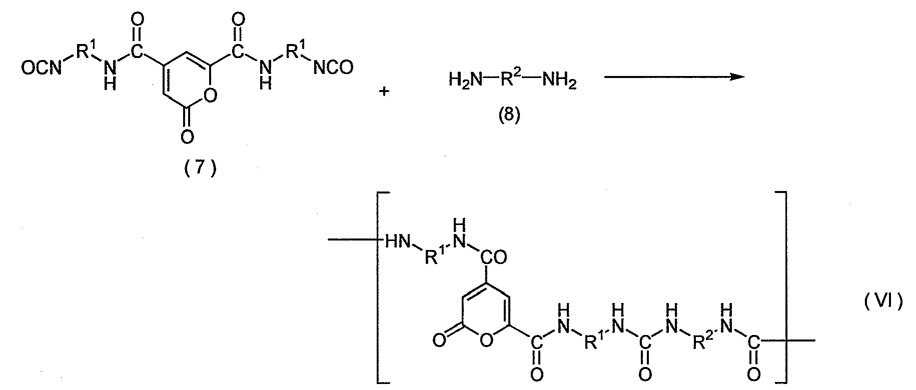

wherein, R¹ and R² are as defined above.

The diisocyanate derivatives represented by formula (7) are novel compounds and can be obtained, for example, by reacting diisocyanate (10) mentioned below with PDC at room temperature until foaming no longer occurs. If necessary, there may be added a small amount of a catalyst which is commonly used for production of polyurethanes such as tin(II) 2-ethylhexanoate. The reaction solvent is not particularly restricted, and as examples thereof, there may be mentioned ether solvents such as tetrahydrofuran, diethyl ether, 1,4-dioxane and dimethoxyethane; aromatic hydrocarbon-based solvents such as benzene, toluene and xylene; alicyclic hydrocarbon solvents such as cyclohexane and cyclohexanone; ester solvents such as acetic acid esters; and ketone solvents such as acetone and methyl ethyl ketone, as well as combinations of two or more of the foregoing. The amount of reaction solvent used will normally be 20-1,000 parts by weight with respect to 100 parts by weight as the total starting material.

As diamines (8) there may be mentioned hydrazine derivatives such as oxalic acid dihydrazide, succinic acid dihydrazide, adipic acid dihydrazide and terephthalic acid dihydrazide; aliphatic diamines such as ethylenediamine, neopentanediamine, 1,2- or 1,3-propanediamine, 1,6-hexamethylenediamine, 1,8-octamethylenediamine, 1,12-dodecamethylenediamine, cyclohexyldiamine, 4,4'-diaminodicyclohexylmethane, 3,3'-dimethyl-4,4'-diaminodicyclohexylmethane, isophorone diamine, 4,7-dioxodecane-1,10-diamine, 4,7,10-trioxadecane-1,13-diamine, and polyoxyalkylenediamines with average molecular weights of 148-400 g/mol; arylaliphatic diamines such as p- or m-xylylenediamine; and aromatic diamines such as 4,4'-diaminodiphenylmethane and 3,3'-dimethyl-4,4'-diaminodiphenylmethane.

Although a polymerization catalyst is not absolutely necessary for production of a polyurea of the present invention, when it is used, it is preferable to use those described in <Production processes for polyurethanes represented by formulae (III) and (IV)>, and the amount used is the amount mentioned therein.

As examples of solvents there may be mentioned ether solvents such as tetrahydrofuran, diethyl ether, 1,4-dioxane and dimethoxyethane; aromatic hydrocarbon solvents such as benzene, toluene and xylene; alicyclic hydrocarbon solvents such as cyclohexane and cyclohexanone; ester solvents such as acetic acid esters; and ketone solvents such as acetone and methyl ethyl ketone. These solvents may also be used in combinations of two or more. The amount of solvent used will normally be 20-1,000 parts by weight with respect to 100 parts by weight as the total starting monomer.

The polymerization reaction may be carried out at between 0°C and room temperature, if necessary, with heating, for 1 hour to several hours.

### Production Process 2:

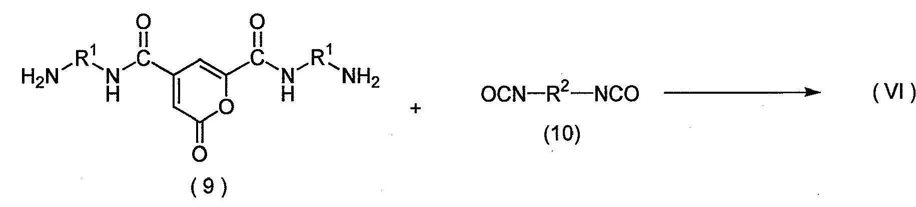

wherein, R¹ and R² are as defined above.

The diamine derivatives represented by formula (9) are novel compounds and can be obtained, for example, by adding water to diisocyanate derivative (7) mentioned above at room temperature until foaming no longer occurs. Water will usually be used in an amount of 500-1,000 parts by weight with respect to 100 parts by weight of diisocyanate derivative (7).

As diisocyanates (10) there may be used diisocyanates (5) mentioned in <<Production processes for polyurethanes represented by formulae (III) and (IV)>.

The polymerization conditions including the catalyst, temperature and time for production process 2 are the same as for production process 1.

There are no particular restrictions on the mixing ratio of the diamine component and diisocyanate component, but it is preferably about 1:1.2-1:2 as the molar ratio. If the diisocyanate component is used in excess of this range, it may not be possible to obtain a high molecular weight compound, or a crosslinked structure may form by reaction with previously formed urea bonds. If it is used below this range, on the other hand, it may not be possible to obtain a sufficiently high molecular weight polymer with the desired physical properties.

There are no particular restrictions on the molecular weight of the polyurea of the invention, and it will normally be about 2,000-200,000 as the weight-average molecular weight, although this will differ depending on the purpose. From the viewpoint of ease of preparing the solution, molding workability and the physical properties such as mechanical strength, it is most preferably about 2,500-100,000.

Depending on the use, the composition containing the polyurea of the present invention may contain additional additives used in polyurea compositions of the prior art, including flame retardants such as phosphorus compounds or halogen-containing compounds, antioxidants, ultraviolet absorbers, pigments, dyes, plasticizers and the like.

When the polymer of the present invention is a polyurethane or polyurea, it is useful for various purposes including sheets, films, belts, hoses, vibration-proof materials, shoe soles, artificial leather, synthetic leather, fiber treatment agents, coating materials, adhesives, waterproof materials, elastic fibers, flooring materials and the like. When the polymer of the present invention is foamed urethane, it is useful for such purposes as heat-insulating materials, structural materials, protective materials and sound insulating materials, for example in automobile carpets, ceiling and wall impact-absorbing or sound-absorbing cushion materials, linings for safety parts, gaskets, air filters, household and business carpets, clothing, and the like.

### Examples

The present invention will now be described in greater detail by examples, with the understanding that the invention is not limited to these examples. The physical properties of the obtained polymers were measured by the following methods.
(1) Glass transition temperature: Measured by differential scanning calorimetry (DSC), with increasing the temperature at a temperature-elevating rate of 10°C/min.
(2) Thermogravimetry: Determined by measuring the temperature at which given weight decrease from the initial weight upon raising the temperature from 50°C at a temperature-elevating rate of 10°C/min under a nitrogen atmosphere is observed using a thermogravimetric analyzer (TGA) (TG50: product of Mettler-Toledo Inc.).
(3) Weight-average molecular weight: Determining by measuring the molecular weight by gel permeation chromatography (GPC). Calibration was performed using standard polystyrene, and the weight-average molecular weight was determined based on polystyrene.
(4) Crystal melting point: Measured by differential thermal analysis (DTA).
(5) Crystallization temperature: A differential scanning calorimeter was used to measure the crystal growth speed.
(6) Flexural modulus, loss factor: Evaluated on the basis of dynamic viscoelasticity (DMS). The apparatuses used were SDM/5600 and DMS110 by Seiko Instruments, Inc., within a temperature range of -60°C to 100°C and with temperature increase at a temperature-elevating rate of 5°C/min.
(7) Loss factor: Determined by measurement of bending (twin beam) at a frequency of 0.1, 0.5, 1.5, 10, 50 and 100 Hz.

### Example 1: BHPDC polyurethane

After converting PDC to PDC dichloride (hereinafter referred to as "PDC acid chloride") by a conventional method, 10 ml (179.39 mmol) of ethylene glycol was added to 5 g (22.73 mmol) of the PDC acid chloride and reaction was conducted for 1 hour at room temperature under a nitrogen atmosphere. The precipitated white powder was collected by filtration and dried under reduced pressure to obtain 3 g of a PDC diester (hereinafter referred to as "BHPDC").
¹H-NMR (400 MHz, d₆-DMSO)δ ppm: 7.3, 7.1, 5.0, 4.3, 3.7. IR (v cm⁻¹): 3501 (-OH), 1736 (ketone), 1734 (ketone),
1282, 1072 (-C-O-C-).

After adding 5 ml of tetrahydrofuran (THF) and a small amount of tin(II) 2-ethylhexanoate to 1.7 g (6.24 mmol) of BHPDC, 1.0 g (8.61 mmol) of hexamethylene diisocyanate was added in several portions and reaction was conducted for 1 hour at room temperature under a nitrogen atmosphere. It was then precipitated in methanol and the precipitate was collected by filtration and dried under reduced pressure to obtain 0.7 g of the polyurethane.
¹H-NMR (400 MHz, d₆-DMSO)δ ppm: 7.3, 7.1, 6.9, 4.6, 4.4, 4.3, 4.2, 3.7, 2.9, 1.3, 1.2.
IR (v cm⁻¹): 3420 (NH-), 1736 (ketone), 1734 (ketone),
1282 (-C-O-C-).
Weight-average molecular weight: ≥300,000 (N,N-dimethylformamide (DMF)).

### Example 2: BHPDC polyurethane

Polyurethane was obtained in the same manner as Example 1, except that the solvent was changed to dimethyl sulfoxide.
¹H-NMR (400 MHz, d₆-DMSO)δ(ppm): 7.3, 7.1, 6.9, 4.6, 4.4, 4.3, 4.2, 3.7, 2.9, 1.3, 1.2.
IR (v cm⁻¹): 3423 (NH-), 1736 (ketone), 1282, 1072 (-C-O-C-).
Weight-average molecular weight: ≥300,000 (DMF).

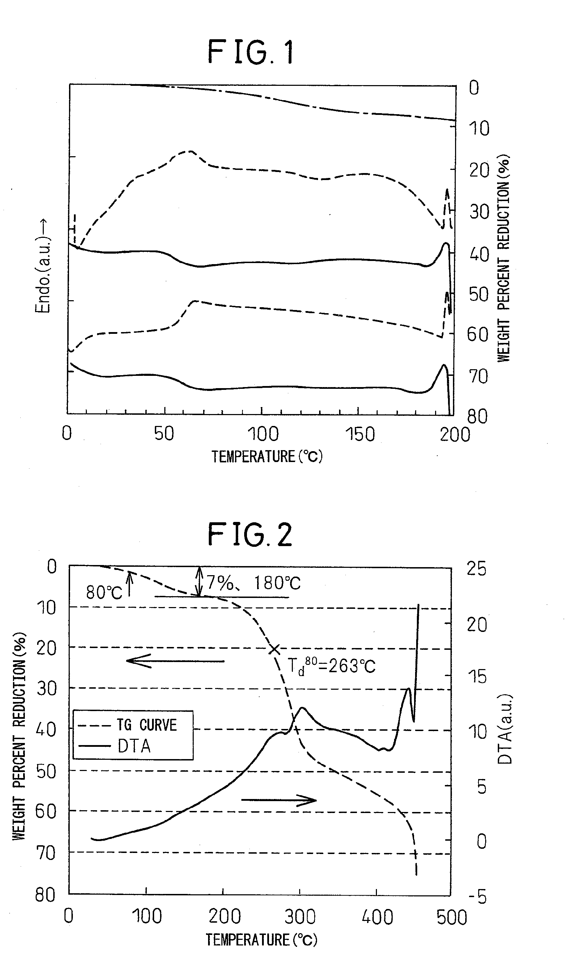

Figs. 1 and 2 show the results of DSC and TGA measurement, respectively, of the polyurethane obtained in Example 2. These figures indicate that the glass transition temperature was approximately 60°C and the 20% by weight reduction temperature (T_{d}⁸⁰) was approximately 260°C.

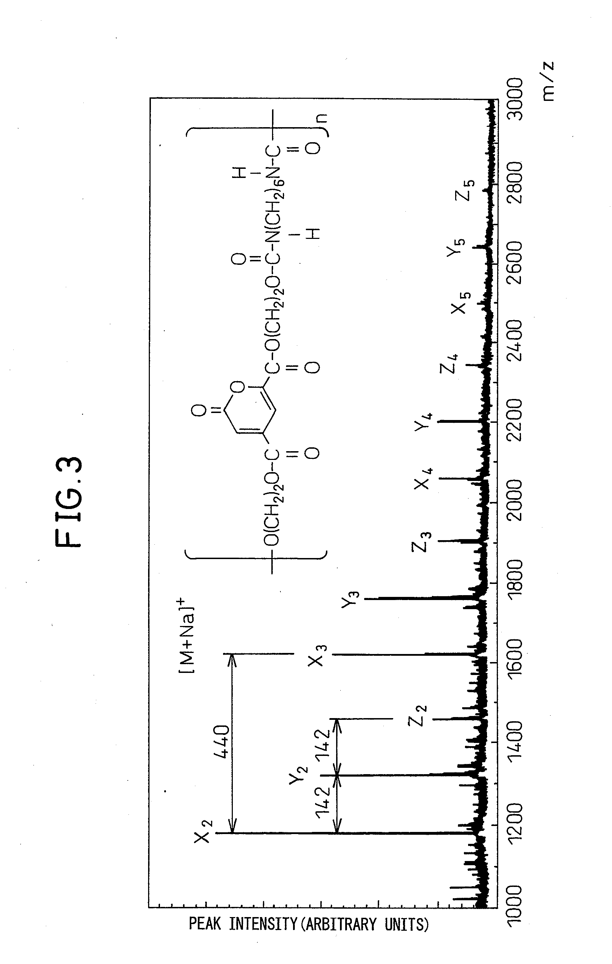

Fig. 3 is shows the results of MALD-TOF-MS measurement of the polyurethane obtained in Example 2. The MALD-TOF-MS measurement results clearly show that a 2-5 mer urethane oligomer (molecular weight: 1200-2800) had been formed, based on calculation of the predicted molecular weight.

### Example 3: BHPDC polyurethane

After dissolving 0.42 g (1.55 mmol) of BHPDC in 5 ml of DMF and adding a small amount of tin(II) 2-ethylhexanoate, 0.26 g (1.51 mmol) of tolylene diisocyanate was added in several portions and reaction was conducted for 1 hour at room temperature under a nitrogen atmosphere. It was then reprecipitated in methanol, filtered, rinsed with water and dried under reduced pressure at 60°C to obtain 0.48 g (71%) of the polyurethane.
IR (v cm⁻¹): 1761 (ketone), 1737 (ketone on pyrone ring), 1731 (ketone), 1707 (carbonyl), 1287, 1090 (-C-O-C-). Glass transition temperature: 114°C.
20% by weight reduction temperature: 223°C, 50% by weight reduction temperature: 440°C.
Weight-average molecular weight: ≥6,500 (THF).

### Example 4: BHPDC polyurethane

After dissolving 0.64 g (2.36 mmol) of BHPDC in 10 ml of DMF and adding a small amount of tin(II) 2-ethylhexanoate, 1.06 g of tolylene diisocyanate was added in several portions and reaction was conducted for 1 hour at room temperature under a nitrogen atmosphere. Next, 3.80 g (4.47 mmol) of ricinolic acid triglyceride was added in several portions and reaction was continued for 12 hours at room temperature under a nitrogen atmosphere. The reaction product was dried under reduced pressure at 60°C to obtain 4.94 g (89%) of the polyurethane.
Ir (v cm⁻¹): 3523 (hydrogen bond), 3361 (NH-), 1751 (ester), 1731 (ketone), 1715 (carbonyl), 1705 (carbonyl),
1238, 1088 (-C-O-C-).
Glass transition temperature: -31°C.
Weight-average molecular weight: ≥13,000 (THF).
Flexural modulus: 172.6 MPa (-30°C), 5.7 MPa (25°C), 3.3 MPa (50°C).
Loss factor: 0.16 (-30°C), 0.26 (25°C), 0.13 (50°C).

### Example 5: BHPDC polyurethane

After adding a small amount of tin(II) 2-ethylhexanoate to a mixed solution containing 1.01 g (3.73 mmol) of BHPDC and 2.64 g (3.11 mmol) of ricinolic acid triglyceride, 1.57 g (9.35 mmol) of hexamethylene diisocyanate was added in several portions and reaction was conducted for 12 hours at room temperature under a nitrogen atmosphere. Reaction was then continued at 50°C for 2 hours and the reaction product was dried under reduced pressure at 60°C to obtain 4.82 g (92%) of the polyurethane.
IR (v cm⁻¹): 3402 (NH-), 3360 (NH-), 2928, 2857 (-CH₂-), 1753 (ester), 1733 (ketone), 1721 (carbonyl), 1705 (carbonyl), 1282, 1044 (-C-O-C-).
20% by weight reduction temperature: 290°C, 50% by weight reduction temperature: 410°C.
Flexural modulus: 57.2 MPa (-30°C), 1.01 MPa (25°C), 0.82 MPa (50°C).
Loss factor: 0.11 (-30°C), 0.08 (25°C), 0.08 (50°C).

### Example 6: BHPDC polyurethane

The polyurethane was obtained in an amount of 5.81 g (76%) in the same manner as Example 5, except for using 1.04 g (3.81 mmol) of BHPDC, 5.45 g (6.41 mmol) of ricinolic acid triglyceride and 1.21 g (7.22 mmol) of hexamethylene diisocyanate.
IR (v cm⁻¹): 3402 (NH-), 3366 (NH-), 2932, 2858 (-CH₂-), 1742(ester), 1733 (ketone), 1727 (carbonyl), 1712 (carbonyl), 1252, 1041 (-C-O-C-).
20% by weight reduction temperature: 300°C, 50% by weight reduction temperature: 410°C.
Flexural modulus: 4.14 MPa (-30°C), 0.57 MPa (25°C), 0.40 MPa (50°C).
Loss factor: 0.36 (-30°C), 0.21 (25°C), 0.17 (50°C).

### Example 7: BHPDC polyurethane

After adding a small amount of tin(II) 2-ethylhexanoate to a mixed solution containing 0.64 g (2.36 mmol) of BHPDC and 3.80 g (4.47 mmol) of ricinolic acid triglyceride, 1.04 g (6.05 mmol) of tolylene diisocyanate was added in several portions and reaction was conducted for 12 hours at room temperature under a nitrogen atmosphere. Reaction was then continued at 50°C for 2 hours and the reaction product was dried under reduced pressure at 60°C to obtain 4.94 g (90%) of a polyurethane.
20% by weight reduction temperature: 290°C, 50% by weight reduction temperature: 400°C.

### Example 8: Ester polyurethane

After dissolving 4.14 g (18.8 mmol) of PDC acid chloride in 15 ml of THF and adding 32.46 g (38.24 mmol) of ricinolic acid triglyceride, reaction was conducted for 1 hour at room temperature under a nitrogen atmosphere, and then at 50°C for 1 hour. After then, 6.33 g (37.65 mmol) of hexamethylene diisocyanate was added in several portions, and reaction was continued for 12 hours at room temperature under a nitrogen atmosphere. The reaction product was dried under reduced pressure at 60°C to obtain 38.62 g (92%) of the polyurethane.
Ir (v cm⁻¹): 3410 (NH-), 3323 (NH-), 1741(ester), 1731 (ketone), 1707(carbonyl), 1245, 1069 (-C-O-C-).
Glass transition temperature: -45°C.
20% by weight reduction temperature: 315°C, 50% by weight reduction temperature: 410°C.

### Example 9: Polyester polyurethane

After adding 1 ml (17.94 mmol) of ethylene glycol to 2.5 g (11.37 mmol) of PDC acid chloride in several portions, reaction was conducted for 12 hours at room temperature under a nitrogen atmosphere. It was then precipitated in methanol and the precipitate was collected by filtration and dried under reduced pressure to obtain 2.5 g of a PDC polyester. ¹H-NMR (400 MHz, d₆-DMSO)δ(ppm) : 7.3, 7.1, 4.6, 4.2, 3.6. IR (v cm⁻¹): 3501 (-OH), 1740 (ketone), 1736 (ketone),
1282 (-C-O-C-).

After dissolving 1.2 g (0.92 mmol) of the PDC polyester in 5 ml of dimethyl sulfoxide and adding a small amount of tin(II) 2-ethylhexanoate, 0.16 g (0.98 mmol) of hexamethylene diisocyanate was added in several portions and reaction was conducted for 1 hour at room temperature under a nitrogen atmosphere. It was then precipitated in methanol and the precipitate was collected by filtration and dried under reduced pressure to obtain 0.60 g of the polyurethane.
Weight-average molecular weight: 300,000 (DMF).

### Example 10: Polyester polyurethane

After dissolving 2.99 g (13.59 mmol) of PDC acid chloride in 10 mL of DMF and adding 2.72 g (equivalent) of polyethylene oxide (molecular weight: 200), reaction was conducted for 12 hours at room temperature under a nitrogen atmosphere. It was then dried under reduced pressure at 60°C to obtain 3.57 g (75%) of PDC-PEG200 polyester.
IR (v cm⁻¹): 1760 (ester), 1738 (ketone on pyrone ring), 1731 (ketone), 1285 (-C-O-C-).
Glass transition temperature: -26°C.
20% by weight reduction temperature: 295°C, 50% by weight reduction temperature: 375°C.
Weight-average molecular weight: ≥10,000 (THF).

After dissolving 1.32 g (0.13 mmol) of the PDC-PEG200 polyester in 10 ml of DMF and adding a small amount of tin(II) 2-ethylhexanoate, 0.065 g (0.39 mmol)
of hexamethylene diisocyanate was added in several portions and reaction was conducted for 1 hour at room temperature under a nitrogen atmosphere. The reaction product was dried under reduced pressure at 60°C to obtain 0.80 g (60%) of the polyurethane.
IR (v cm⁻¹): 3500 (hydrogen bond), 3412 (NH), 1721(ester), 1714 (carbonyl), 1705 (carbonyl), 1235, 1090 (-C-O-C-). Glass transition temperature: -6°C.
20% by weight reduction temperature: 310°C, 50% by weight reduction temperature: 370°C.
Weight-average molecular weight: ≥5000 (THF).

### Example 11: Polyester polyurethane

After dissolving 1.13 g (0.11 mmol) of the PDC-PEG200 polyester obtained in Example 10 in 10 ml of DMF and adding a small amount of tin(II) 2-ethylhexanoate, 0.058 g (0.34 mmol) of tolylene diisocyanate was added in several portions and reaction was conducted for 1 hour at room temperature under a nitrogen atmosphere. The reaction product was dried under reduced pressure at 60°C to obtain 0.66 g (57%) of the polyurethane. IR (v cm⁻¹): 3500 (hydrogen bond), 3400 (NH), 1759 (ester), 1731 (ketone on pyrone ring), 1725 (ketone), 1714 (carbonyl), 1705 (carbonyl), 1278, 1038 (-C-O-C-). Glass transition temperature: 4°C.
20% by weight reduction temperature: 300°C, 50% by weight reduction temperature: 375°C.

### Example 12: Polyester polyurethane

A 12.08 g (82%) amount of PDC-PEG1000 polyester was obtained in the same manner as Example 10, except that the diol component was changed to polyethylene oxide (molecular weight: 1000).
IR (v cm⁻¹): 1763 (ester), 1738 (ketone on pyrone ring), 1727 (ketone), 1718 (carbonyl), 1280 (-C-O-C-).
Crystallization temperature: -15°C. Crystal melting point: 33°C.
20% by weight reduction temperature: 300°C, 50% by weight reduction temperature: 380°C.
Weight-average molecular weight: ≥11,000 (THF).

After dissolving 2.67 g (0.24 mmol) of the PDC-PEG1000 polyester in 10 ml of DMF and adding a small amount of tin(II) 2-ethylhexanoate, 0.048 g (0.29 mmol)
of hexamethylene diisocyanate was added in several portions and reaction was conducted for 1 hour at room temperature under a nitrogen atmosphere. The reaction product was dried under reduced pressure at 60°C to obtain 0.83 g (31%) of the polyurethane.
IR (v cm⁻¹): 3500 (hydrogen bond), 3262 (NH-O-), 1739 (ester), 1700 (carbonyl), 1254, 1099 (-C-O-C-).
Glass transition temperature: -44°C. Crystallization temperature: -15°C. Crystal melting point: 33°C.
20% by weight reduction temperature: 335°C, 50% by weight reduction temperature: 380°C.
Weight-average molecular weight: ≥7,500 (THF).

### Example 13: Polyester polyurethane

After adding 0.022 g (0.18 mmol) of tolylene diisocyanate to 0.37 g (0.29 mmol) of the PDC polyester obtained in Example 9 in several portions, reaction was conducted for 1 hour at room temperature under a nitrogen atmosphere. The reaction product was dried under reduced pressure at 60°C to obtain 0.31 g (79%) of the polyurethane.
IR (v cm⁻¹): 3459 (NH-), 3392 (NH-), 2931, 2865 (-CH₂-), 1770 (ester), 1292, 1047(-C-O-C-).
Glass transition temperature: 111°C.
20% by weight reduction temperature: 285°C, 50% by weight reduction temperature: 390°C.
Weight-average molecular weight: ≥300,000 (DMF).

### Example 14: Foamed polyurethane

Ethylene glycol (1.23 g, 19.84 mmol) and a small amount of tin(II) 2-ethylhexanoate were added to PDC (1.7 g, 9.24 mmol) and dissolved therein at 75°C. Next, hexamethylene diisocyanate (3.16 g, 18.81 mmol) was added and reaction was conducted at the same temperature for 5-15 minutes to obtain the foamed polyurethane.

### Example 15: Foamed polyurethane

After adding hexamethylene diisocyanate (2.80 g, 16.67 mmol), polyethylene oxide (Mw = 600) (0.1 g), dimethyl sulfoxide (0.1 g) and tin(II) 2-ethylhexanoate (small amount) to ethylene glycol (1.05 g, 16.96 mmol) which had dissolved 1 mol% PDC, reaction was conducted for 5-15 minutes at room temperature to obtain the foamed polyurethane.

### Example 16: Polyurea

(1) Synthesis of PDC diisocyanate

After dissolving tolylene diisocyanate (hereinafter, "TDI") (0.5 g, 2.86 mmol) in tetrahydrofuran (hereinafter, "THF") (1 ml), PDC (0.25 g, 1.36 mmol) and a small amount of tin(II) 2-ethylhexanoate were added and reaction was conducted for about 1 hour under nitrogen to obtain a mixture comprising N4,N6-bis(5-isocyanate-2-methylphenyl)-2-oxo-2H-pyran-4,6-dicarboxyamide represented by the following formula: 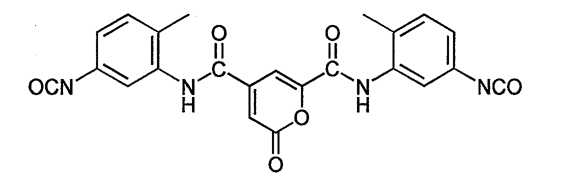 and three different positional isomers thereof (N4,N6-bis(3-isocyanate-4-methylphenyl)-2-oxo-2H-pyran-4,6-dicarboxyamide; N4-(5-isocyanate-2-methylphenyl),N6-(3-isocyanato-4-methylphenyl)-2-oxo-2H-pyran-4,6-dicarboxyamide; N4-(3-isocyanate-4-methylphenyl), N6-(5-isocyanato-2-methylphenyl)-2-oxo-2H-pyran-4,6-dicarboxyamide). The mixture was used without purification for Example 2.
(2) Synthesis of PDC diamine

The PDC diisocyanate mixture obtained in (1) above was added to purified water (0.1 ml) and reaction was conducted for 1 hour at room temperature until foaming no longer occurred, to obtain a mixture of the N4,N6-bis(5-amino-2-methylphenyl)-2-oxo-2H-pyran-4,6-dicarboxyamide represented by the following formula: 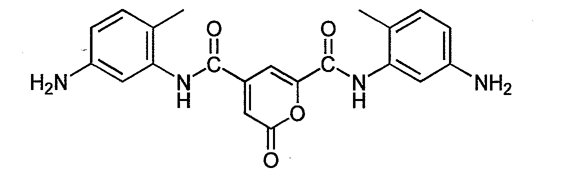 and the three different positional isomer amides mentioned in Example 1.
(3) Production of polyurea

A small amount of a dimethylformamide (hereinafter, "DMF") (5 ml) solution containing the PDC diamine mixture (0.44 g, 1.1 mmol) obtained in (2) above was added to a DMF (5 ml) solution containing the PDC diisocyanate mixture (0.5 g, 1.1 mmol) obtained in (1) above, reaction was conducted for 3 hours at room temperature, and upon reprecipitation in methanol a precipitate was obtained.
It was then dried at 60°C in a vacuum to obtain 0.27 g of the target polyurea (yield: 28.5%).

### Example 17: Polyurea

To a DMF (5 ml) solution containing (0.13 g, 0.33 mmol) of the PDC diamine mixture obtained in (2) above there was added TDI (0.057 ml, 0.40 mmol), and after reaction for 3 hours at room temperature and reprecipitation in methanol, a precipitate was obtained. It was then dried at 60°C in a vacuum to obtain 0.089 g of the target polyurea (yield: 48%).

### Example 18: Polyurea

First, a di(2-hydroxyethyl) 2H-pyrone-4,6-dicarboxylate ester (hereinafter, "PDCHE") was synthesized from PDC according to the method described in International Patent Publication No. WO99/54376. PDC was produced by the method described in Japanese Unexamined Patent Publication (Kokai) No. 2005-278549.

The PDCHE (0.44 g, 1.27 mmol) was dissolved in THF (5 ml), and after adding hexamethylene diisocyanate (0.54 g, 3.21 mmol) and a small amount of tin(II) 2-ethylhexanoate, reaction was conducted for 4 hours at room temperature under a nitrogen atmosphere. Water (0.03 g, 1.67 mmol) was then added dropwise. After 15 minutes, a faint yellow solid solution was obtained. The obtained solid solution was reprecipitated in methanol and filtered, and then rinsed in water and methanol and dried overnight at 50°C to obtain 0.40 g of a faint yellow powder.
FT-IR (v cm⁻¹): 1650 (NHCONH), 1336 (N-C-N).
5% by weight reduction temperature: 210°C, 50% by weight reduction temperature: 325°C, 80% by weight reduction temperature: 260°C.
Weight-average molecular weight: ≥71,000 (DMF).

### Example 19: Polyurea

PDCHE (0.36 g, 1.32 mmol) was dissolved in 5 ml of THF, and after adding TDI (0.6 g, 3.45 mmol) and a small amount of tin(II) 2-ethylhexanoate, reaction was conducted for 4 hours at room temperature under a nitrogen atmosphere. Water (0.03 g, 1.67 mmol) was then added dropwise. After 15 minutes, an orange solid solution was obtained. The obtained solid solution was reprecipitated in methanol and filtered, and then rinsed in water and methanol and dried overnight at 50°C to obtain 0.81 g of an orange powder.
FT-IR (v cm⁻¹): 1650 (NHCONH), 1338 (N-C-N).
5% by weight reduction temperature: 180°C, 50% by weight reduction temperature: 395°C, 80% by weight reduction temperature: 240°C.
Weight-average molecular weight: ≥300,000 (DMF).

### Industrial Applicability

According to the present invention it is possible to efficiently and inexpensively produce highly elastic biodegradable polymers.

## Claims

1. A polymer comprising a repeating unit represented by the following formula (I): 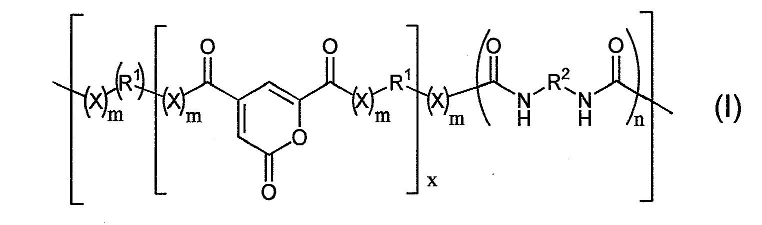 wherein
R¹ and R² each independently represent a divalent hydrocarbon residue with no active hydrogens in its structure and optionally containing a heteroatom;
X represents O or NH;
x represents an integer of at least 1; and
m and n represent 0 or 1.

2. The polymer according to claim 1, which is a polyurethane comprising a repeating unit represented by the following formula (II): 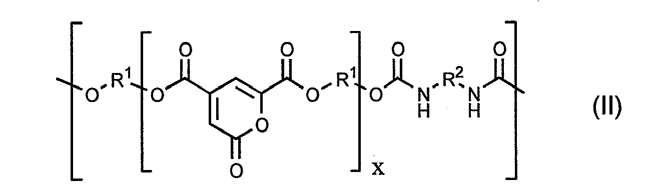 wherein
R¹ and R² each independently represent a divalent hydrocarbon residue with no active hydrogens in its structure and optionally containing a heteroatom; and x represents an integer of at least 1.

3. The polymer according to claim 2, wherein the polyurethane has a repeating unit represented by the following formula (III): 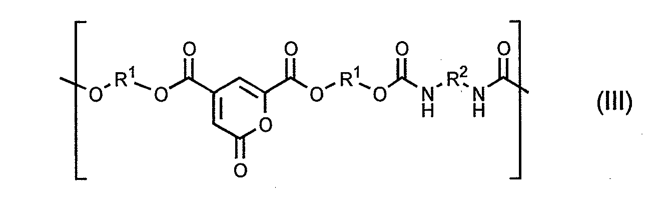 wherein R¹ and R² have the same definitions as above.

4. The polymer according to claim 2, wherein the polyurethane has a repeating unit represented by the following formula (IV): 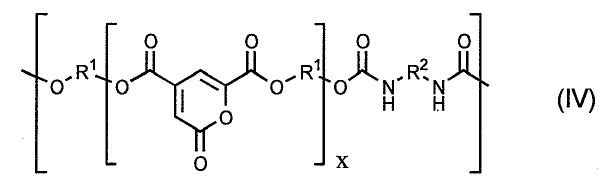 wherein R¹ and R² have the same definitions as above, and x is an integer of at least 2.

5. The polymer according to any one of claims 1 to 4, wherein R¹ and R² each independently represent R³, R³-(OR³)ₐ or R⁴-(O₂C-R³-CO₂R⁴)_{b}, where R³ and R⁴ each independently represent a C1-24 saturated or unsaturated divalent hydrocarbon residue, and a and b each independently an integer of 1-4.

6. The polymer according to any one of claims 1 to 5, wherein R¹ and R² each independently represent a C1-24 straight or branched alkylene group.

7. The polymer according to claim 1, which is a polyurethane comprising a repeating unit represented by the following formula (V): 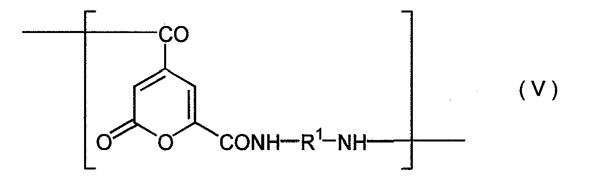 wherein R¹ represents a divalent hydrocarbon residue with no active hydrogens in its structure and optionally containing a heteroatom.

8. The polymer according to claim 7, which is an foamable polyurethane.

9. The polymer according to claim 7 or 8, wherein R¹ represents R³, R³-(OR³)ₐ or R⁴-(O2C-R³-CO2R⁴)_{b}, where R³ and R⁴ each independently represent a C1-24 saturated or unsaturated divalent hydrocarbon residue, and a and b each independently represent an integer of 1-4.

10. The polymer according to any one of claims 7 to 9, wherein R¹ represents a C1-24 straight or branched alkylene group.

11. The polymer according to any one of claims 7 to 10, wherein R¹ represents a hexamethylene group.

12. A process for production of a polymer having a repeating unit represented by the following formula (I): 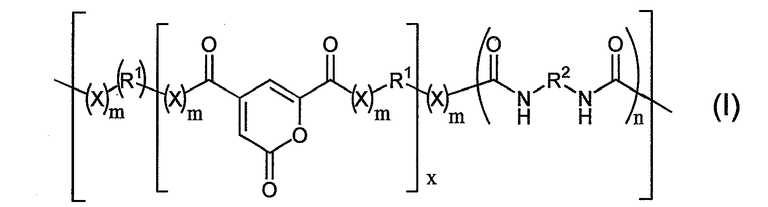 wherein
R¹ and R² each independently represent a divalent hydrocarbon residue with no active hydrogens in its structure and optionally containing a heteroatom;
X represents O or NH;
x represents an integer of at least 1; and
m and n represent 0 or 1,
the process being **characterized in that** 2H-pyron-2-one-4,6-dicarboxylic acid or its derivative is reacted with diisocyanates in the absence of a foaming agent; or
a diamine component containing a diamine of 2H-pyron-2-one-4,6-dicarboxylic acid is reacted with a diisocyanate component containing a diisocyanate of 2H-pyron-2-one-4,6-dicarboxylic acid, in the absence of a foaming agent, with the proviso that a diamine of 2H-pyron-2-one-4,6-dicarboxylic acid and/or a diisocyanate of 2H-pyron-2-one-4,6-dicarboxylic acid is used for either or both the diamine component and diisocyanate component, respectively.

13. The process according to claim 12, wherein the 2H-pyron-2-one-4,6-dicarboxylic acid derivative is a diester of 2H-pyron-2-one-4,6-dicarboxylic acid, or a polyester thereof, obtained by reacting 2H-pyron-2-one-4,6-dicarboxylic acid with a polyol.

14. The polymer according to claim 1, which is a polyurea comprising a repeating unit represented by the following formula (VI): 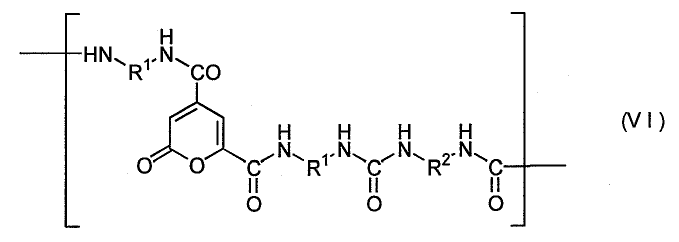 wherein R¹ and R² each independently represent a divalent hydrocarbon residue with no active hydrogens in its structure and optionally containing a heteroatom.

15. The polymer according to claim 14, wherein R¹ and R² each independently represent R³, R³-(OR³)ₐ or R⁴-(O₂C-R³-CO₂R⁴)_{b}, where R³ and R⁴ each independently represent a C1-24 saturated or unsaturated divalent hydrocarbon residue, and a and b each independently represent an integer of 1-4.

16. The polymer according to claim 14 or 15, wherein R¹ and R² each independently represent a C1-24 straight or branched alkylene group or C5-10 aromatic divalent hydrocarbon residue.

17. A compound represented by the following formula (VII) : 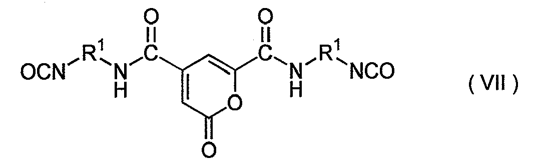 wherein R¹ represents a divalent hydrocarbon residue with no active hydrogens in its structure and optionally containing a heteroatom.

18. A compound represented by the following formula (VIII): 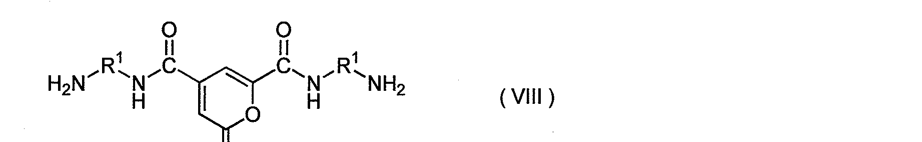 wherein R¹ represents a divalent hydrocarbon residue with
no active hydrogens in its structure and optionally containing a heteroatom.

19. The process for production of a polymer according to claim 12, **characterized by** polyaddition of a diisocyanate component and a diamine component using either or both a compound represented by the following formula (VII): 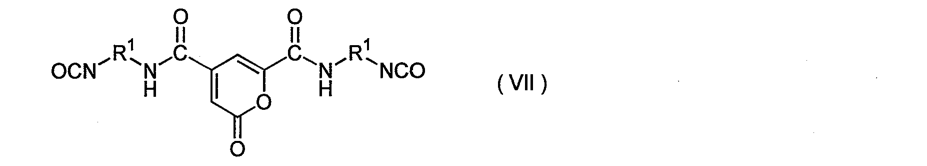 wherein R¹ represents a divalent hydrocarbon residue with no active hydrogens in its structure and optionally containing a heteroatom or a compound represented by the following formula (VIII): 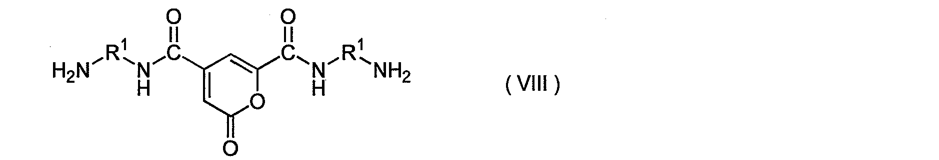 wherein R¹ represents a divalent hydrocarbon residue with no active hydrogens in its structure and optionally containing a heteroatom, as the diisocyanate component and diamine component, respectively.
